# EUROPEAN PATENT APPLICATION

(11) **EP 2 592 514 A1**
(43) Date of publication of application: **15.05.2013**
(21) Application number: 12192070.6
(22) Date of filing: 09.11.2012
(51) Int. Cl.: G05B 19/418, H04L 12/403, H04L 29/08, H04L 12/24

(54) **Systems and methods for displaying data associated with the operation of foundation fieldbus devices**

(30) Priority: 11.11.2011 US 201113294695
(71) Applicant: General Electric Company, Schenectady, New York 12345 (US)
(72) Inventor: Thakur, Pavan Kumar Singh, 500040 Andhra Pradesh (IN); Alahari, Venkata Chandrakanth, 500080 Andhra Pradesh (IN); Ojha, Pradyumna, 500003 Andhra Pradesh (IN)
(74) Representative: Picker, Madeline Margaret

(57) **Abstract**

Systems and methods are provided for displaying data associated with the operation of Foundation Fieldbus devices. A client device may include at least one computer that executes a client application. The client device may establish a communication channel with a host device configured to collect device parameter data associated with one or more Foundation Fieldbus devices. At least a portion of the device parameter data may be received by the client device from the host device via the established communication channel. A visual representation of the received device parameter data may then be generated by the client application.

## Description

### BACKGROUND OF THE INVENTION

Embodiments of the invention relate generally to Foundation Fieldbus devices and more specifically to displaying or presenting data associated with the operation of Foundation Fieldbus devices.

Control systems are utilized in a wide variety of different applications. For example, control systems are utilized in conjunction with power generating devices, in power plants, and/or in process plants. A control system typically includes a central controller in communication with other components of the control system, for example, sensors, measurement devices, valves, etc. The central controller typically communicates with the other components via suitable network communications.

With the development and adoption of the Foundation Fieldbus standard, Foundation Fieldbus devices have been incorporated into control systems. The use of visualization controls offered by Foundation Fieldbus Device Description ("DD") Services allows various Fieldbus device parameters to be updated and illustrated in the control system. However, existing systems do not provide for separation of the visualization controls from other components of a suite of Foundation Fieldbus software. In conventional systems, a Foundation Fieldbus software suite is deployed as a single tier installation. In other words, a complete suite of software needs to be installed in order to utilize any of the submodules, such as a visualization module. As a result of this relatively heavy deployment, additional system resources and licensing fees are typically required in order to provide visualization and other functionality to a plurality of computing devices. Accordingly, there is an opportunity for improved systems and methods that facilitate the display of data associated with the operation of Foundation Fieldbus devices.

### BRIEF DESCRIPTION OF EMBODIMENTS OF THE INVENTION

Some or all of the above needs and/or problems may be addressed by certain embodiments of the invention. Embodiments of the invention may include systems and methods for displaying or presenting data associated with the operation of Foundation Fieldbus devices. In various embodiments of the invention, a host device or host system may include a suite of Foundation Fieldbus software, and any number of client devices may include a module or application that is configured to display or present data obtained from the host device. According to one embodiment of the invention, there is disclosed a method for displaying data associated with Foundation Fieldbus devices. A client device may include at least one computer that executes a client application. The client device may establish a communication channel with a host device configured to collect device parameter data associated with one or more Foundation Fieldbus devices. At least a portion of the device parameter data may be received by the client device from the host device via the established communication channel. A visual representation of the received device parameter data may then be generated by the client application.

According to another embodiment of the invention, there is disclosed a system for displaying data associated with Foundation Fieldbus devices. The system may include at least one memory and at least one processor. The at least one memory may be configured to store computer-executable instructions associated with a client application. The at least one processor may be configured to access the at least one memory and execute the computer-executable instructions to: establish a communication channel with a host device configured to collect device parameter data associated with one or more Foundation Fieldbus devices; receive, from the host device via the established communication channel, at least a portion of the device parameter data; and generate a visual representation of the received device parameter data.

According to yet another embodiment of the invention, there is disclosed a method for presenting data associated with Foundation Fieldbus devices. Device parameter data associated with one or more Foundation Fieldbus devices may be collected by a host device that includes one or more computers. A request to establish a communication channel may be received by the host device from a client device. The requested communication channel may be established by the host device, and at least a portion of the device parameter data may be communicated by the host device to the client device. The client device may execute a client application that utilizes the communicated data to generate a visual representation associated with the operation of the one or more Foundation Fieldbus devices.

Additional systems, methods, apparatus, features, and aspects are realized through the techniques of various embodiments of the invention. Other embodiments and aspects of the invention are described in detail herein and are considered a part of the claimed invention. Other embodiments and aspects can be understood with reference to the description and the drawings.

### BRIEF DESCRIPTION OF THE DRAWINGS

Having thus described the invention in general terms, reference will now be made to the accompanying drawings, which are not necessarily drawn to scale, and wherein:
FIG. 1 is a block diagram of one example control system that may be utilized in accordance with various embodiments of the invention.
FIG. 2 is a flow diagram of one example method for displaying device parameter data associated with Foundation Fieldbus devices, according to an illustrative embodiment of the invention.

### DETAILED DESCRIPTION OF EMBODIMENTS OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are systems and methods for displaying data associated with the operation of Foundation Fieldbus devices. In certain embodiments of the invention, a host device and one or more client devices may be provided. The host device may be configured to collect device parameter data associated with one or more Foundation Fieldbus devices. Additionally, the host device may be configured to execute a wide variety of software associated with Foundation Fieldbus devices. For example, the host device may be configured to execute a suite of Foundation Fieldbus software, such as a device description service kit or service pack of software. Each client device may be configured to execute a standalone version of a visualization component that is included in the suite of software executed by the host device. In this regard, data, such as device parameter data, may be communicated from the host device to a client device and displayed by the client device. Additionally, each client device is not required to execute the entire suite of available Foundation Fieldbus software. In this regard, the cost, overhead, and maintenance of multiple deployments of visualization software may be reduced.

In one example embodiment, a host system may be configured to receive live device parameter data associated with the operation of one or more Foundation Fieldbus devices. In certain embodiments, the device parameter data may include data that is output by at least one Foundation Fieldbus device, such as a Fieldbus linking device or another Fieldbus device. Additionally, as desired, the received device parameter data may include live data that is collected in real time or near real time.

Once device parameter data has been received or collected by the host device, at least a portion of the device parameter data may be communicated to one or more client devices. In this regard, a visualization component associated with a client device may be utilized to generate one or more visual representations associated with the Fieldbus devices. In certain embodiments, device parameter data collected by the host device may be automatically communicated to a client device. In other embodiments, device parameter data may be communicated in accordance with user profiles and/or preferences associated with a client device. In yet other embodiments, a request for device parameter data may be received by the host device from a client device, and device parameter data may be communicated to the client device in response to the request.

A wide variety of suitable techniques and/or methods may be utilized to facilitate communication of device parameter data to a client device. For example, a suitable communication channel may be established between the client device and the host device, and device parameter data may be communicated via the established communication channel. In certain embodiments, the communication channel may be a .NET Remoting communication channel, although other interprocess communication techniques may be utilized. Additionally, a wide variety of suitable networks and/or connections may be utilized to facilitate communication between the host device and a client device.

Once device parameter data has been received by a client device, the visualization component of the client device may generate one or more visual representations of the operation of the one or more Fieldbus devices. For example, a visual representation of measurements, readings, and/or other data associated with the Fieldbus devices may be generated. As desired, the visual representation may be formed as a user interface, and the visual representation may include suitable user controls. In certain embodiments, a standalone visualization module associated with Fieldbus Device Description ("DD") Services and/or Device Definition Services, such as a suitable DDVisualization module, may be utilized to generate visual representations. As desired, suitable DDVisualization controls, such as chart, variable control representation, grid, and/or graph controls, may be utilized to generate and/or prepare the visual representations. According to an aspect of the invention, the visual representation may illustrate or depict received device parameter data and/or other live data associated with the operation of the Fieldbus devices. Additionally, the illustrated values may be updated and/or dynamically changed as additional data is received.

Additionally, as desired, device description data associated with the Foundation Fieldbus devices may be utilized by a client device in the generation of a visual representation. The device description data may include a wide variety of identification and/or configuration data associated with the Fieldbus devices. In certain embodiments, the device description data may be stored in one or more files, such as binary files provided by manufacturers of the Fieldbus devices, that are accessed by the client device. In other embodiments, the device description data may be received by a client device from the host device.

Various embodiments of the invention may include one or more special purpose computers, systems, and/or particular machines that facilitate the display or presentation of device parameter data associated with the operation of Foundation Fieldbus devices. A special purpose computer or particular machine may include a wide variety of different software modules as desired in various embodiments. As explained in greater detail below, in certain embodiments, these various software components may be utilized to communicate device parameter data associated with Foundation Fieldbus devices from a host device to one or more client devices in order to facilitate the generation of visual representation of the device parameter data by the client devices.

Certain embodiments of the invention described herein may have the technical effect of facilitating the presentation of device parameter data associated with Foundation Fieldbus devices on one or more client computers in communication with a host computer. In other words, embodiments of the invention may have the technical effect of providing distributed standalone Fieldbus visualization functionality on one or more client devices. In this regard, the cost, maintenance, and overhead associated with installing Fieldbus software onto a plurality of devices may be reduced.

Various embodiments of the invention incorporate Foundation Fieldbus-type (hereinafter "Fieldbus") devices into control systems (or other systems), for example, control systems associated with power generating devices (e.g., gas turbines, steam turbines, wind turbines, etc.), power plants, and/or process plants. A wide variety of Fieldbus devices may be utilized as desired in various embodiments of the invention. Examples of Fieldbus devices include, but are not limited to, sensors, gauges, measurement devices, valves, actuators, input/output subsystems, host systems, linking devices, any suitable Fieldbus H1 devices, and/or any suitable Fieldbus high-speed Ethernet ("HSE") devices. In certain embodiments, H1 devices may operate and/or communicate at a different rate than HSE devices. As one example, H1 devices may operate at approximately 31.25 kilobits per second, and HSE devices may operate at approximately 100 megabits per second. As desired, various HSE devices, such as linking devices, may be utilized to interconnect H1 devices to a central controller of the control system. Additionally, the term HSE protocol may be utilized to refer to a Fieldbus protocol that facilitates communications with HSE Fieldbus devices.

Communications between Fieldbus devices and/or between one or more controllers and/or host devices of the control system and the Fieldbus devices may be facilitated by utilizing a Fieldbus protocol. The Fieldbus protocol is an all-digital serial, two-way communication protocol that provides a standardized physical interface to a bus or network interconnecting field equipment or Fieldbus devices. The Fieldbus protocol is an open-architecture protocol developed and administered by the Fieldbus Foundation. The Fieldbus protocol provides, in effect, a local area network for field instruments or field devices within a plant or facility, which enables these field devices to perform control functions at locations distributed throughout the facility and to communicate with one another before and after the performance of these control functions to implement an overall control strategy. Because the Fieldbus protocol enables control functions to be distributed throughout a process control network, it may reduce the workload of a central controller.

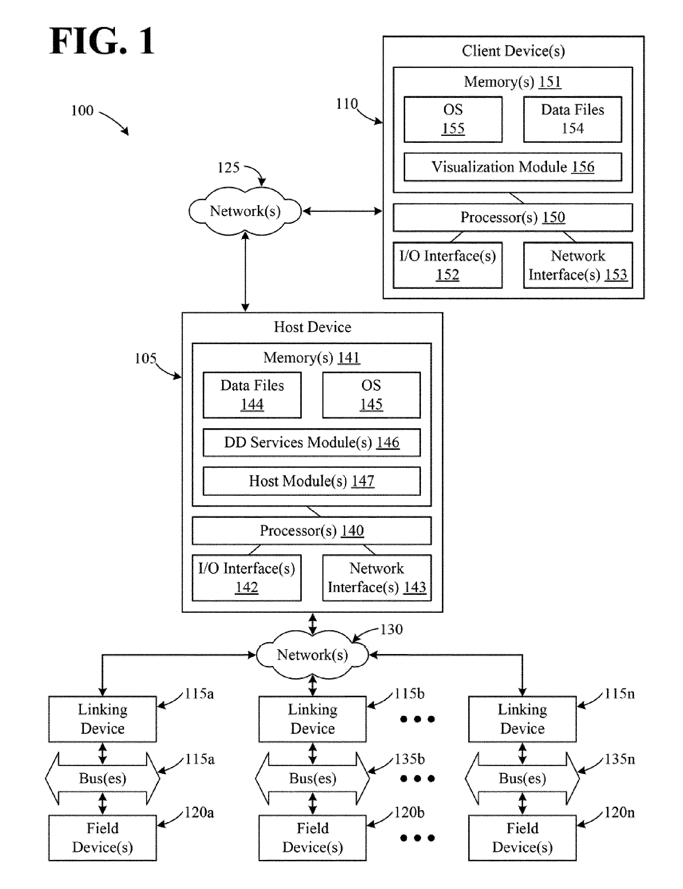

FIG. 1 is a block diagram of one example control system 100 that may be utilized in accordance with various embodiments of the invention. The control system 100 may include, for example, one or more host devices 105, one or more client devices 110, one or more linking devices 115a-n, and/or one or more Fieldbus devices 120a-n. In certain embodiments, the host devices 105 may communicate with the client devices 110 via one or more suitable networks 125 or communication connections. Additionally, as desired the host devices 105 may communicate with the linking devices 115a-n via one or more other networks 130 or communications buses. In certain embodiments, the host devices 105 may communicate directly with the linking devices 115a-n. In other embodiments, one or more suitable controllers or control devices may facilitate communication between the host devices 105 and the linking devices 115a-n. Additionally, the linking devices 115a-n may communicate with the various Fieldbus devices 120a-n via one or more suitable buses 135a-n or networks.

As desired, any number of linking devices 115a-n may be utilized in association with the control system 100. The linking devices 115a-n may be devices that are capable of communicating via a Fieldbus network or bus and via one or more relatively higher speed networks that facilitate communications with the host devices 105 and/or one or more suitable controllers in communication with the host devices 105. For example, a linking device (generally referred to as linking device 115) may be a High Speed Ethernet ("HSE") Fieldbus device or a combination HSE/H1 device. As such, the linking device 115 may be capable of communicating with a host device 105 via a suitable Ethernet network or other suitable network 130. Additionally, the linking device 115 may be capable of communicating with connected Fieldbus devices 120a-n via one or more Fieldbus networks and/or data buses 135a-n. As desired, the linking devices 115a-n may facilitate communication between the host devices 105 and the Fieldbus devices 120a-n. Alternatively, in other embodiments, a Fieldbus device 120 may be in direct communication with a host device 105 (or controller) via a suitable network 130 or bus 135.

A linking device 115 may include any number of segments and/or connections to which a Fieldbus data bus 135 or local Fieldbus network may be connected. For example, in certain embodiments, a linking device 115 may include four (4) segments, although any other number of segments may be included as desired. Each segment may establish a separate communication channel and be configured to facilitate communications between the linking device 115 and the Fieldbus devices connected to the segment.

In operation, a linking device 115 may be configured to output a wide variety of messages, such as timing messages and/or messages including parameter data or other live data output by the Fieldbus devices 120a-n, for communication to the host devices 105. For example, in certain embodiments, one or more messages may be periodically communicated. As another example, one or more messages may be communicated based upon detected changes in monitored values. According to an aspect of the invention, a communicated message may include timing information and/or device parameter data associated with the Fieldbus devices 120a-n connected to the linking device 115. As an alternative to a host device 105 receiving a message from a linking device 115 (or an intermediary controller), a message may be received directly from a Fieldbus device 120 in certain embodiments of the invention.

With continued reference to FIG. 1, any number of Fieldbus devices 120a-n may be utilized in association with the control system 100. In certain embodiments, each Fieldbus device (generally referred to as device 120) may be in communication with a linking device 115 via a local Fieldbus network or data bus 135. In this regard, communications between the Fieldbus device 120 and the host device 105 may be facilitated by the linking device 115. In other embodiments, a Fieldbus device 120 may be in direct communication with a host device 105 (or a controller in communication with the host device 105). A wide variety of different types of Fieldbus devices may be utilized as desired in various embodiments of the invention, including any number of H1 Fieldbus devices and/or other suitable devices. In certain embodiments, the Fieldbus devices 120a-n may be distributed or situated at varying points within a power plant or process plant. In this regard, the Fieldbus devices 120a-n may be utilized to monitor and/or control various aspects and/or operations of a plant.

In certain embodiments, a Fieldbus device 120 may be operable or configured to output device parameter data, such as measurements data, events data, and/or any other suitable data associated with the operation of the Fieldbus device 120, for communication to the host device 105. For example, the Fieldbus device 120 may be configured to output data in accordance with a relevant operating cycle.

With continued reference to FIG. 1, the one or more illustrated networks 130 may include any suitable network or combination of networks that facilitate communications between the linking devices 115a-n and the host devices 105 (and/or any intermediary controllers). Similarly, the illustrated networks 125 may include any suitable network or combination of networks that facilitate communications between the host devices 105 and the client devices 110. The Fieldbus data buses 135a-n or networks may include any number of suitable data buses and/or local area networks that facilitate communications between the linking devices 115a-n and the Fieldbus devices that are connected to the linking devices 115a-n. Examples of suitable networks and/or data buses include, but are not limited to, a local area network, a wide area network, the Internet, a radio frequency ("RF") network, a Bluetooth^{™} enabled network, any suitable wired network, any suitable wireless network, or any suitable combination of wired and wireless networks. In certain embodiments of the invention, such as embodiments that utilize an Ethernet network, one or more Ethernet switches may be provided. The Ethernet switches may route data within the network. Each of the Ethernet switches may include hardware and/or software components that are operable to facilitate the routing of data within the network. Examples of suitable Ethernet switches include, but are not limited to, network bridges, multilayer switches, etc. As desired in various embodiments of the invention, redundant components may be provided within a network and/or the control system 100. For example, redundant wiring, switches, and/or routers may be provided. Additionally, in certain embodiments redundant linking devices 115a-n and/or segments may be provided. In this regard, adequate operations may be maintained within the control system 100 in the event of failure of certain network devices.

With continued reference to FIG. 1, the control system 100 may include one or more host devices 105. In certain embodiments, the host devices 105 may include one or more suitable controllers. In other embodiments, the host devices 105 may be in communication with one or more suitable controllers. Some examples of suitable controllers are a Mark^{™} VI control system and a Mark^{™} Vie control system provided by the General Electric Company. A controller may be configured to communicate with and/or control other components of the control system 100 and/or components of the plant or system that is controlled by the control system 100. Additionally, a controller may be configured to receive data associated with the operation of the Fieldbus devices 120a-n and/or the linking devices 115a-n, to process at least a portion of the received data, and/or to output one or more control signals or other messages for receipt by any number of linking devices 115a-n and/or Fieldbus devices 120a-n.

A host device 105, whether or not it includes a controller, may be configured to receive and process data associated with the operation of the Fieldbus devices 120a-n and/or the linking devices 115a-n. In certain embodiments, a host device 105 may be configured to execute a suite of Foundation Fieldbus software, such as a Device Description service pack or service kit. In other words, the host device 105 may function as a toolbox device. The Foundation Fieldbus software may include a wide variety of suitable functionality associated with the operation of the Fieldbus devices 120a-n. For example, the Foundation Fieldbus software executed by the host device 105 may include a plurality of different modules and/or submodules that are configured to provide support, control, visualization, and/or other services associated with the Fieldbus devices 120a-n. Additionally, according to an aspect of the invention, the host device 105 may be configured to communicate information associated with the Fieldbus devices 120a-n to one or more suitable client devices 110. In this regard, standalone visualization software executed by the client devices 110 may be configured to receive and display device parameter data associated with the Fieldbus devices 120a-n. In other words, a user interface associated with a client device 110 may be provided, and a user (e.g., a technician, etc.) may be presented with data associated with the control system and/or the Fieldbus operations. In certain embodiments, data (e.g., live data, etc.) may be provided to a client device 110 in real time or near real time in order to dynamically provide up-to-date control system information. Additionally, the host device 105 may be configured to receive, from one or more client devices 110, user instructions associated with operation of the control system 100 and/or the Fieldbus devices 120a-n.

Each host device 105 may include one or more suitable computers or computing devices, such as personal computers, handheld computing devices, mini-computers, etc. In certain embodiments, the operations of the host device 105 may be controlled by computer-executed or computer-implemented instructions that are executed by one or more processors associated with the host device 105. The instructions may be embodied in one or more software components as desired in various embodiments of the invention. The execution of the instructions may form a special purpose computer or other particular machine that is operable to control the operations of the host device 105 and/or to facilitate the communication of device parameter data associated with the Fieldbus devices 120a-n to any number of client devices 110. The one or more processors that control the operations of the host device 105 may be incorporated into the host device 105 and/or be in communication with the host device 105 via one or more suitable networks. In certain embodiments of the invention, the operations and/or control of the host device 105 may be distributed among several processing components.

The host device 105 may include one or more processors 140, one or more memory devices 141, one or more input/output ("I/O") interface devices 142, and/or one or more network interface device(s) 143. The one or more memory devices 141 may be any suitable memory devices, for example, caches, read-only memory devices, random access memory devices, magnetic storage devices, etc. The one or more memory devices 141 may store data, executable instructions, and/or various program modules utilized by the host device 105, for example, one or more data files 144, an operating system ("OS") 145, one or more Device Description ("DD") Services modules 146, and/or one or more host modules 147. The data files 144 may include any suitable data associated with the operation of the host device 105 and/or the control system 100, for example, measurements data, operating data, device parameter data, live data, device description data, data associated with controllers, data associated with the client devices 110, data associated with the linking devices 115a-n, and/or data associated with the Fieldbus devices 120a-n. The OS 145 may include executable instructions and/or program modules that facilitate and/or control the general operation of the host device 105. For example, the OS 145 may facilitate the execution of other software programs and/or program modules by the processors 140.

The DD Services module 146 may be a suitable software module that facilitates a wide variety of service functions associated with the Fieldbus devices 120a-n, such as the receipt and display of data associated with the linking devices 115a-n and the Fieldbus devices 120a-n. In certain embodiments, the DD Services module 146 may include functionality associated with a DD Services kit for Foundation Fieldbus devices, such as a DD Services kit provided by one or more manufacturers of Fieldbus devices. The host modules 147 may be suitable software modules that facilitate the establishment of communication sessions with any number of client devices 110. For example, the host modules 147 may be configured to establish network communication sessions and/or interprocess communication sessions with the client devices 110. In certain embodiments, the host modules 147 may facilitate the establishment of .NET Remoting communication sessions with various visualization modules 156 associated with the client devices 110.

In operation, device parameter data (e.g., measurements, readings, operational data, etc.), also known as live data, may be output by one or more Fieldbus devices 120a-n and received by the DD Services module 146. In certain embodiments, the device parameter data may be communicated to the host device 105 and the DD Services module 146 via the linking devices 115a-n and/or any number of intermediate controllers. In certain embodiments, the device parameter data may include data that is received by the DD Services module 146 in real time or near real time as the data is output by the Fieldbus devices 120a-n.

Once device parameter data has been received or collected, at least a portion of the device parameter data may be communicated to respective visualization modules 156 associated with the client devices 110. In certain embodiments, device parameter data may be pushed to client devices 110. In other embodiments, device parameter data may be communicated to client devices 110 in response to received requests for the device parameter data. For example, a user of a client device 110 may request certain device parameter data, and the client device 110 may request the desired data from the host device 105. The request may be processed by the host device 105, and the desired device parameter data may be returned. As set forth above, a host module 147 may facilitate the establishment of a communication session that is utilized to communicate the device parameter data. For example, a .NET Remoting communication session may be utilized to communicate data to a client device 110. Once received by a client device 110, the client device 110 may utilize the device parameter data to generate one or more suitable visual representations associated with the operation of the Fieldbus devices 120a-n.

Additionally, as desired in certain embodiments, the host device 105 may communicate device description data associated with the Foundation Fieldbus devices 120a-n to one or more client devices 110, and the client devices 110 may utilize at least a portion of the device description data in the generation of one or more visual representations. The device description data may include a wide variety of identification and/or configuration data associated with the Fieldbus devices 120a-n. In certain embodiments, the device description data may be stored in one or more files, such as electronic device description language ("EDDL") binary files provided by manufacturers of the Fieldbus devices, that are accessed by the DD Services module 146 of the host device 105. In other embodiments, the device description data may be stored by the client devices 110. For example, copies of the EDDL files may be stored by the client devices 110.

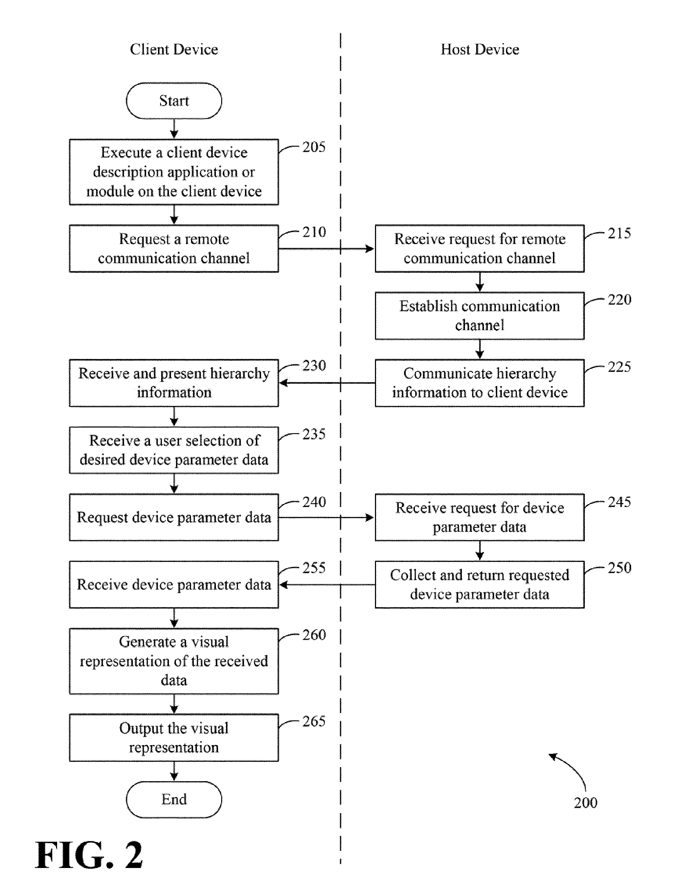

One example of the operations that may be performed by the host device 105 and its associated software or modules is described in greater detail below with reference to FIG. 2.

With continued reference to the host device 105, the one or more I/O interface devices 142 may facilitate interaction between the host device 105 and any number of suitable input and/or output devices. In this regard, user inputs and/or other inputs may be received by the host device 105. Additionally, a wide variety of data may be output by the host device 105 for presentation to a user. Examples of suitable input and output devices include, but are not limited to, a keyboard, a keypad, a mouse, a display, a touch screen display, a microphone, a speaker, removable memory devices, and/or any number of devices that communicate via suitable data ports. The one or more network interface devices 143 may facilitate connection of the host device 105 to any number of networks, such as the networks 125, 130 illustrated in FIG. 1. In this regard, the host device 105 may communicate with any number of other components of the control system 100.

With continued reference to FIG. 1, any number of client devices 110 may be provided. Each client device 110 may include functionality for receiving device parameter data associated with the Fieldbus devices 120a-n from a host device 105 and displaying and/or otherwise presenting at least a portion of the device parameter data to a user. In certain embodiments, a client device 110 may provide a human machine interface (HMI) between the control system 100 and one or more operators of the control system 100. For example, a client device 110 may facilitate the receipt of user input and/or user commands associated with the operation of the control system 100. According to an aspect of the invention, each client device 110 may include and be configured to execute a suitable application or module that facilitates the display of device parameter data associated with the Fieldbus devices 120a-n. For example, each client device 110 may be associated with a standalone version of a DDVisualization module, such as a DDVisualization module that has been extracted or separated from a suite of Foundation Fieldbus software or a DDVisualization module that has been independently developed. In this regard, each client device 110 may facilitate distributed display functionality for Fieldbus data.

Each client device 110 may include one or more suitable computers or computing devices, such as personal computers, handheld computing devices, mini-computers, etc. In certain embodiments, the operations of the client device 110 may be controlled by computer-executed or computer-implemented instructions that are executed by one or more processors associated with the client device 110. The instructions may be embodied in one or more software components as desired in various embodiments of the invention. The execution of the instructions may form a special purpose computer or other particular machine that is operable to control the operations of the client device 110 and/or to facilitate the display of device parameter data associated with the Fieldbus devices 120a-n. The one or more processors that control the operations of the client device 110 may be incorporated into the client device 110 and/or be in communication with the client device 110 via one or more suitable networks. In certain embodiments of the invention, the operations and/or control of the client device 110 may be distributed among several processing components.

The client device 110 may include one or more processors 150, one or more memory devices 151, one or more input/output ("I/O") interface devices 152, and/or one or more network interface device(s) 153. The one or more memory devices 151 may be any suitable memory devices, for example, caches, read-only memory devices, random access memory devices, magnetic storage devices, etc. The one or more memory devices 151 may store data, executable instructions, and/or various program modules utilized by the client device 110, for example, one or more data files 154, an operating system ("OS") 155, and/or a visualization module 156. The data files 154 may include any suitable data associated with the operation of the client device 110 and/or the control system 100, for example, measurements data, operating data, device parameter data, live data, device description data, data associated with the host devices 105, data associated with the linking devices 115a-n, and/or data associated with the Fieldbus devices 120a-n. The OS 155 may include executable instructions and/or program modules that facilitate and/or control the general operation of the client device 110. For example, the OS 155 may facilitate the execution of other software programs and/or program modules by the processors 150.

The visualization module 156 may be a suitable software module that facilitates the receipt and display of data associated with the linking devices 115a-n and the Fieldbus devices 120a-n. In certain embodiments, the visualization module 156 may include functionality associated with a DDVisualization component, such as a DDVisualization component that may be included in a DD Services kit for Foundation Fieldbus devices. However, in certain embodiments of the invention, the visualization module 156 may be a standalone module, and the client device 110 may not include any other functionality of the DD Services kit. The visualization module 156 may include functionality for generating one or more visual representations in association with a Fieldbus specification. In certain embodiments, the visualization module 156 may include visualization functionality, such as functionality that facilitates the generation, preparation, and/or display of various charts, graphs, waveforms, variable control representations, grids, and/or other interfaces associated with Foundation Fieldbus data.

In operation, device parameter data (e.g., measurements, readings, operational data, etc.), also known as live data, may be received by the client device 110 from the host device 105, and the visualization module 156 may utilize at least a portion of the received device parameter data to generate one or more visual representations associated with the operation of the Fieldbus devices 120a-n. In certain embodiments, a communication session may be established between the client device 110 or the visualization module 156 and a host module 147 of the host device 105. The established communication session may be utilized to facilitate the communication of device parameter data (and optionally device description data) from the host device 105 to the client device 110. A wide variety of suitable techniques may be utilized to facilitate the establishment of a communication session. For example, .NET Remoting may be utilized to facilitate communication of device parameter data from the host device 105 to the client device 110. Additionally, in certain embodiments, the client device 110 may request the communication of available device parameter data or desired device parameter data from the host device 105. In other embodiments, the host device 105 may push device parameter data to the client device 110.

Once device parameter data has been received or collected, the visualization module 156 may utilize at least a portion of the received data to generate or prepare one or more visual representations associated with the operation of one or more of the Fieldbus devices 120a-n. For example, a visual representation of measurements, readings, and/or other data associated with the Fieldbus devices 120a-n may be generated. In certain embodiments, the visual representation may illustrate or depict received device parameter data and/or other live data associated with the operation of the Fieldbus devices 120a-n. Additionally, the illustrated values may be updated and/or dynamically changed as additional data is received. As desired, a visual representation may be formed as a user interface, and the visual representation may include any number of suitable user controls and/or selectable indicators that facilitate the receipt of user instructions. For example, a visual representation may facilitate user instructions associated with desired data to be displayed and/or requests to record data.

Additionally, as desired in certain embodiments, the visualization module 156 may utilize device description data associated with the Foundation Fieldbus devices 120a-n in the generation of one or more visual representations. The device description data may include a wide variety of identification and/or configuration data associated with the Fieldbus devices 120a-n. In certain embodiments, the device description data may be stored in one or more files, such as electronic device description language ("EDDL") binary files provided by manufacturers of the Fieldbus devices, that are accessed by the visualization module 156 and utilized to generate one or more visual representations. In other embodiments, the device description data may be received by the client device 110 from an external source, such as the host device 105.

One example of the operations that may be performed by the client device 110 and its associated software or modules is described in greater detail below with reference to FIG. 2.

With continued reference to the client device 110, the one or more I/O interface devices 152 may facilitate interaction between the client device 110 and any number of suitable input and/or output devices. In this regard, user inputs and/or other inputs may be received by the client device 110. Additionally, a wide variety of data may be output by the client device 110 for presentation to a user. Examples of suitable input and output devices include, but are not limited to, a keyboard, a keypad, a mouse, a display, a touch screen display, a microphone, a speaker, removable memory devices, and/or any number of devices that communicate via suitable data ports. The one or more network interface devices 153 may facilitate connection of the client device 110 to any number of networks, such as the networks 125 illustrated in FIG. 1. In this regard, the client device 110 may communicate with any number of other components of the control system 100, such as the host device 105.

As desired, embodiments of the invention may include a control system 100 with more or less than the components illustrated in FIG. 1. The control system 100 of FIG. 1 is provided by way of example only. Additionally, embodiments of the invention may be utilized in association with any system that makes use of Foundation Fieldbus devices and is not limited to control systems.

FIG. 2 is a flow diagram of one example method 200 for displaying or presenting device parameter data associated with Foundation Fieldbus devices, according to an illustrative embodiment of the invention. The method 200 may be performed by a suitable host device and client device, such as the host device 105 and client device 110 associated with the control system 100 of FIG. 1. In certain embodiments, various operations of the method 200 may be performed by a suitable DD Services and/or host module functionality of the host device 105 and by suitable standalone visualization functionality associated with the client device 110. The method may begin at block 205.

At block 205, a suitable client device description application or module may be executed by a client device 110. According to an aspect of the invention, the executed application may be a suitable application that facilitates the visualization and/or display of data associated with Foundation Fieldbus devices. For example, the application may be a suitable application that facilitates the display of device parameter data associated with Foundation Fieldbus devices. Additionally, in certain embodiments of the invention, the application or module may be a standalone application or module. In other words, the application may be separated from and/or distributed from a suite of Foundation Fieldbus software that provides additional functionality. In this regard, the implementation and maintenance cost associated with installing and executing the application on the client device 110 may be relatively lower than the cost associated with installing an entire suite of Foundation Fieldbus software.

At block 210, the client device 110 and/or the application executed by the client device 110 may request the establishment of a remote communication channel or communication session with a host device 105. A wide variety of different types of requests may be utilized as desired to facilitate the establishment of a remote communication channel or session. For example, a request to establish a .NET Remoting session may be communicated to the host device 105. The host device 105 may be a suitable device that is configured to receive or collect device parameter data that is output by one or more Foundation Fieldbus devices. Additionally, the host device 105 may be configured to execute a wide variety of different Foundation Fieldbus software, such as a DD Services kit or other suite of Foundation Fieldbus software. This software may provide a wide variety of different identification, control, visualization, and/or other functions associated with the Fieldbus devices.

At block 215, the request to establish a remote communication channel or session may be received by the host device 105. The host device 105 may then establish a suitable communication channel or communication session with the client device 110 at block 220. For example, a .NET Remoting communication channel may be established between a host module of the host device 105 and the device description application executed by the client device 110.

At block 225, a wide variety of identification information and/or configuration information associated with the Foundation Fieldbus devices may be communicated to the client device 110 by the host device 105. For example, hierarchy information (e.g., identification information for linking devices, segments, and/or Fieldbus devices) associated with the Foundation Fieldbus devices may be communicated. As another example, device description data associated with the Foundation Fieldbus devices may be communicated. The communicated identification and/or configuration information may be received by the client device 110 at block 230. As desired, at least a portion of the information may be displayed to a user of the client device 110. In this regard, a user may specify Fieldbus devices and/or various data parameters for which device parameter data is desired. For example, a user selection of desired device parameter data may be received by the client device 110 at block 235. As desired, a user may utilize a wide variety of menus, options, and/or other selectable indicators in order to provide a user selection of desired device parameter data to the client device 110.

At block 240, a request for device parameter data may be generated by the client device 110 and communicated to the host device 105. For example, information associated with a user selection may be evaluated and utilized to request desired device parameter data. As another example, the client device 110 may utilize a user profile to request desired device parameter data. As yet another example, the client device 110 may request available device parameter data.

The request for device parameter data may be received by the host device 105 at block 245. At block 250, the host device 105 may identify and/or collect the requested device parameter data. The requested device parameter data may then be returned to the client device 110. For example, the device parameter data may be communicated to the client device 110 in response to a .NET Remoting request and/or via an established communication channel. In certain embodiments, requested device parameter data may be continually communicated to the client device 110 in real time or near real time. In other embodiments, identified changes in the device parameter data may be communicated by the host device 105 to the client device 110. In this regard, relatively up-to-date data may be received by the client device 110.

At block 255, device parameter data may be received by the client device 110 from the host device 105. In certain embodiments of the invention, device parameter data may be continuously received in a real time or near real time manner. At least a portion of the received device parameter data may be processed by the client device description application at block 260 in order to generate one or more visual representations associated with the operation of the Fieldbus devices. For example, one or more charts, graphs, grids, and/or other visual representations may be generated by the device description application. The generated one or more visual representations may then be output for display or presentation to a user of the client device 110 at block 265.

The method 200 may end following block 265.

The operations described in the method 200 do not necessarily have to be performed in the order set forth in FIG. 2, but instead may be performed in any suitable order. Additionally, in certain embodiments of the invention, more or less than all of the elements or operations set forth in FIG. 2 may be performed.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims.

This written description uses examples to disclose the invention, including the best mode, and also to enable any person skilled in the art to practice the invention, including making and using any devices or systems and performing any incorporated methods. The patentable scope of the invention is defined in the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for presenting data associated with Foundation Fieldbus devices, the method comprising:
establishing, by a client device (100) comprising at least one computer executing a client application, a communication channel with a host device (105) configured to collect device parameter data associated with one or more Foundation Fieldbus devices (120);
receiving, by the client device (100) from the host device (105) via the established communication channel, at least a portion of the device parameter data; and
generating, by the client application, a visual representation of the received device parameter data.

2. The method of Claim 1, wherein establishing a communication channel comprises establishing a .NET Remoting communication channel.

3. The method of Claim 1 or Claim 2, wherein establishing a communication channel with a host device (105) comprises establishing a communication channel with a host device executing a suite of Foundation Fieldbus software, wherein the client application comprises a standalone version of a visualization component included in the suite of Foundation Fieldbus software.

4. The method of Claim 1, 2 or 3, further comprising:
receiving, by the client device (100), a user selection of desired data; and
requesting, by the client device (100) based at least in part upon the received user selection, the at least a portion of the device parameter data.

5. The method of any preceding Claim, further comprising:
identifying, by the device, device description data associated with the one or more Foundation Fieldbus devices (120),
wherein generating a visual representation comprises generating a visual representation based at least in part upon the device description data.

6. The method of any preceding Claim, wherein receiving at least a portion of the device parameter data comprises receiving data in real time.

7. The method of any preceding Claim, wherein generating a visual representation comprises generating at least one of (i) a chart, (ii) a variable control representation, or (iii) a grid.

8. A system comprising:
at least one memory (151) operable to store computer-executable instructions associated with a client application;
at least one processor (150) configured to access the at least one memory (151) and execute the computer-executable instructions to perform the method of any one of claims 1 to 7.

9. A method for presenting data associated with Foundation Fieldbus devices, the method comprising:
collecting, by a host device (105) comprising one or more computers, device parameter data associated with one or more Foundation Fieldbus devices (120);
receiving, by the host device (105) from a client device (100), a request to establish a communication channel;
establishing, by the host device (105), the requested communication channel; and
communicating, by the host device (105) to the client device (100), at least a portion of the device parameter data, wherein a client application executed by the client device utilizes the communicated data to generate a visual representation associated with the operation of the one or more Foundation Fieldbus devices (120).

10. The method of Claim 9, wherein establishing a communication channel comprises establishing a .NET Remoting communication channel.

11. The method of Claim 9 or Claim 10, wherein collecting device parameter data comprises collecting device parameter data utilizing a suite of Foundation Fieldbus software executed by the host device (105), and
wherein receiving a request to establish a communication channel comprises receiving a request from a client device (100) executing the client application as a standalone version of a visualization component included in the suite of Foundation Fieldbus software.

12. The method of Claim 9, 10 or 11, further comprising:
receiving, by the host device from the client device (100), one or more parameters associated with desired device parameter data; and
communicating the at least a portion of the device parameter data based at least in part upon the received one or more parameters.

13. The method of any one of Claims 9 to 12, further comprising:
communicating, by the host device (105) to the client device (100), at least a portion of device description data associated with the one or more Foundation Fieldbus devices.

14. The method of any one of Claims 9 to 13, wherein communicating at least a portion of the device parameter data comprises communicating data in real time.

15. A system comprising:
at least one memory (141) operable to store computer-executable instructions associated with a host application;
at least one processor (140) configured to access the at least one memory (141) and execute the computer-executable instructions to perform the method of any one of Claims 9 to 14.
